# EUROPEAN PATENT APPLICATION

(11) **EP 4 373 051 A1**
(43) Date of publication of application: **22.05.2024**
(21) Application number: 23202473.7
(22) Date of filing: 09.10.2023
(51) Int. Cl.: H04L 47/2491, H04W 28/02

(54) **APPARATUSES, METHODS AND NON-TRANSITORY COMPUTER-READABLE STORAGE MEDIUMS FOR NETWORK ACCESS TO RESIDENTIAL GATEWAYS**

(30) Priority: 15.11.2022 US 202218055534
(71) Applicant: Nokia Solutions and Networks Oy, 02610 Espoo (FI)
(72) Inventor: Wadhwa, Sanjay, Sunnyvale, 94085 (US); De Smedt, Killian, 2018 Antwerp (BE); Wan, Kenneth, Ottawa, K2K 2E6 (CA); Poscic, Kristian, Mountain View, 94043-4023 (US)
(74) Representative: Bryers Intellectual Property Ltd

(57) **Abstract**

A network element includes at least one processor and at least one memory. The at least one memory stores instructions that, when executed by the at least one processor, cause the network element to: establish a PFCP session between the residential gateway and a network, the PFCP session hosting a set of forwarding rules for forwarding data traffic between the control plane and the separate user plane, the set of forwarding rules including a classification index referencing a QoS template, the QoS template including a set of traffic classifiers and one or more sets of QoS parameters. The set of traffic classifiers is associated with the classification index, each of the sets of QoS parameters is associated with a respective QoS rule index, and each traffic classifier is associated with a QoS rule index.

## Description

### TECHNICAL FIELD

One or more example embodiments relate to methods, apparatuses, and/or non-transitory computer-readable storage mediums for providing network access to residential gateways.

### BACKGROUND

Third Generation Partnership Project (3GPP) 5th generation (5G) technology is a next generation of radio systems and network architecture that can deliver extreme broadband and ultra-robust, low latency connectivity. 5G technology improves a variety of telecommunication services offered to end users and helps support massive broadband that delivers gigabytes of bandwidth per second on demand for both uplink and downlink transmissions.

A 5G network may support IP services, such as IP television (IPTV) services for a residential gateway (RG), such as a 5^{th} Generation-RG (5G-RG) served by the 5G Core (5GC).

### SUMMARY

The scope of protection sought for various example embodiments is set out by the independent claims. The example embodiments and/or features, if any, described in this specification that do not fall under the scope of the independent claims are to be interpreted as examples useful for understanding various embodiments.

A Broadband Network Gateway (BNG) is an access point through which network subscribers connect to a core network, such as a 5GC. Control and User Plane Separation in Broadband Network Gateway (CUPS BNG) is an example of a disaggregated BNG. CUPS BNG is defined in Broadband Forum (BBF) Technical Report TR-459.

Providing Quality of Service (QoS) per subscriber session is a function of the BNG. One or more example embodiments provide mechanisms to utilize Packet Forwarding Control Protocol (PFCP) messages to program wireline based QoS functions on a CUPS BNG.

One or more example embodiments also provide mechanisms to update QoS parameters of a subscriber session in mid-session (sometimes referred to as QoS override), mechanisms in which to update a QoS template across all subscriber sessions (e.g., via PFCP association messages), and/or mechanisms to selectively update QoS parameters included in a QoS template as needed on a per subscriber basis. In one example, QoS parameters of a subscriber session may be updated without loss of connection with the core network.

One or more example embodiments also provide a format in which to express a QoS template that allows for QoS parameter updates for individual subscriber sessions (e.g., via PFCP session modification messages) and/or across all subscriber sessions sharing the QoS template (e.g., via PFCP association messages).

At least one example embodiment provides a method for network access by a residential gateway in a control and user plane separation architecture. The method includes: establishing, via an aggregate gateway function, a packet forwarding control protocol session between the residential gateway and a network, the packet forwarding control protocol session hosting a set of forwarding rules for forwarding data traffic between the control plane and the separate user plane, the set of forwarding rules including a classification index referencing a quality of service (QoS) template, the QoS template including a set of traffic classifiers and one or more sets of QoS parameters, where the set of traffic classifiers is associated with (e.g., indexed by) the classification index, each of the one or more sets of QoS parameters is associated with (e.g., indexed by) a respective QoS rule index among one or more QoS rule indices, and each traffic classifier in the set of traffic classifiers is associated with a QoS rule index among the one or more QoS rule indices; and facilitating, via the aggregate gateway function, network access by the residential gateway according to the packet forwarding control protocol session.

At least one other example embodiment provides a non-transitory computer-readable storage medium storing computer-executable instructions that, when executed by at least one processor at a network element, cause the network element to perform a method for network access by a residential gateway in a control and user plane separation architecture. The method includes: establishing, via an aggregate gateway function at the network element, a packet forwarding control protocol session between the residential gateway and a network, the packet forwarding control protocol session hosting a set of forwarding rules for forwarding data traffic between the control plane and the separate user plane, the set of forwarding rules including a classification index referencing a quality of service (QoS) template, the QoS template including a set of traffic classifiers and one or more sets of QoS parameters, where the set of traffic classifiers is associated with (e.g., indexed by) the classification index, each of the one or more sets of QoS parameters is associated with (e.g., indexed by) a respective QoS rule index among one or more QoS rule indices, and each traffic classifier in the set of traffic classifiers is associated with a QoS rule index among the one or more QoS rule indices; and facilitating, via the aggregate gateway function, network access by the residential gateway according to the packet forwarding control protocol session.

According to example embodiments, the one or more QoS rule indices and the one or more sets of QoS parameters may be expressed as information elements.

The one or more sets of QoS parameters may include at least one of rate or priority information for the data traffic.

The method may include: updating at least one of the one or more sets of QoS parameters based on residential gateway-level wireline access characteristics (RG-LWAC) from the network.

The method may include updating the QoS template to change at least one of (i) a QoS parameter of a first of the one or more sets of QoS parameters or (ii) the QoS rule indices, based on the RG-LWAC.

The updating may include: sending a packet forwarding control protocol session modification message from the control plane to the separate user plane, the packet forwarding control protocol session modification message including reference to a QoS rule index and one or more QoS parameters to be updated; and updating the QoS parameters based on the packet forwarding control protocol session modification message.

The method may further include programming the QoS template at the separate user plane prior to establishing the packet forwarding control protocol session.

At least one example embodiment provides a network element to facilitate network access by a residential gateway in a control and user plane separation architecture. The network element includes at least one processor and at least one memory. The at least one memory stores instructions that, when executed by the at least one processor, cause the network element to: establish a packet forwarding control protocol session between the residential gateway and a network, the packet forwarding control protocol session hosting a set of forwarding rules for forwarding data traffic between the control plane and the separate user plane, the set of forwarding rules including a classification index referencing a quality of service (QoS) template, the QoS template including a set of traffic classifiers and one or more sets of QoS parameters, where the set of traffic classifiers is associated with (e.g., indexed by) the classification index, each of the one or more sets of QoS parameters is associated with (e.g., indexed by) a respective QoS rule index among one or more QoS rule indices, and each traffic classifier in the set of traffic classifiers is associated with a QoS rule index among the one or more QoS rule indices; and facilitate network access by the residential gateway according to the packet forwarding control protocol session.

At least one example embodiment provides a network element to facilitate network access by a residential gateway in a control and user plane separation architecture. The network element includes: means for establishing a packet forwarding control protocol session between the residential gateway and a network, the packet forwarding control protocol session hosting a set of forwarding rules for forwarding data traffic between the control plane and the separate user plane, the set of forwarding rules including a classification index referencing a quality of service (QoS) template, the QoS template including a set of traffic classifiers and one or more sets of QoS parameters, where the set of traffic classifiers is associated with (e.g., indexed by) the classification index, each of the one or more sets of QoS parameters is associated with (e.g., indexed by) a respective QoS rule index among one or more QoS rule indices, and each traffic classifier in the set of traffic classifiers is associated with a QoS rule index among the one or more QoS rule indices; and means for facilitating network access by the residential gateway according to the packet forwarding control protocol session.

According to example embodiments, the at least one memory may store instructions that, when executed by the at least one processor, cause the network element to update at least one of the one or more QoS parameters based on RG-LWAC from the network.

The at least one memory may store instructions that, when executed by the at least one processor, cause the network element to update the at least one of the one or more QoS parameters by changing the QoS template based on the RG-LWAC.

The at least one memory may store instructions that, when executed by the at least one processor, cause the network element to update the QoS template to change at least one of (i) a QoS parameter of a first of the one or more sets of QoS parameters or (ii) the QoS rule indices, based on the RG-LWAC.

The at least one memory may store instructions that, when executed by the at least one processor, cause the network element to: send a packet forwarding control protocol session modification message from the control plane to the user plane, the packet forwarding control protocol session modification message including reference to a QER index and one or more QoS parameters to be updated; and update the QoS parameters based on the packet forwarding control protocol session modification message.

The at least one memory may store instructions that, when executed by the at least one processor, cause the network element to program the QoS template at the separate user plane prior to establishing the packet forwarding control protocol session.

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of this disclosure.
FIG. 1 is a block diagram illustrating a portion of a system architecture for wireless core network access, according to example embodiments.
FIG. 2 is a signal flow diagram illustrating a method according to example embodiments.
FIG. 3 is a signal flow diagram illustrating another method according to example embodiments.
FIG. 4 illustrates a Quality of Service (QoS) template according to example embodiments.
FIG. 5 illustrates an example embodiment of a network node at which an Aggregate Gateway Function (AGF) may be implemented.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

It should be understood that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

While one or more example embodiments may be described from the perspective of a function or network element such as a network node, Aggregate Gateway Function (AGF) node, residential gateway (RG), server, etc., it should be understood that one or more example embodiments discussed herein may be performed by one or more processors (or processing circuitry) at the applicable device, apparatus, network node, network element, or system. For example, according to one or more example embodiments, at least one memory may store instructions that, when executed by one or more processors, cause the network element/network node, or the like, to perform the operations discussed herein.

As discussed herein, the term "mechanism," in addition to its plain and ordinary meaning, may refer to methods, apparatuses and/or non-transitory computer readable storage mediums where applicable.

As discussed herein, the terminology "one or more" and "at least one" may be used interchangeably.

It will be appreciated that a number of example embodiments may be used in combination.

As discussed herein, the term "subscriber" refers to the purchaser or subscriber of broadband services, and which utilizes a residential gateway (RG) to access the services. The term "user" refers to users of an end user device or customer premises equipment (CPE) that send and receive user traffic through the RG. Although used in this way for the sake of clarity, a user may also be referred to as a subscriber.

As discussed herein, a packet data unit (PDU) session refers to an IP based PDU session. An IP based PDU session (sometimes referred to as an IP session) refers to an IP connection established between a RG (e.g., a 5^{th} Generation-Residential Gateway (5G-RG)) and a wireless core network, such as a 5GC, where the wireless core network assigns the RG one or more IP addresses to use for transmission and reception of traffic (e.g., data and control traffic). In operation, a RG utilizes the assigned IP address(es) or IP prefix(es) to connect to the Internet (or other data network). In at least some instances, a RG may obtain several different IP addresses/prefixes for each type of service, wherein each represents a different IP Session. IP based PDU sessions include a single IPv4 session, a single IPv6 session or a single dual stack IP session. Although discussed herein with regard to IP sessions for example purposes, example embodiments should not be limited to these examples. Rather, example embodiments may be applicable to other PDU session types.

In a Control and User Plane Separation in Broadband Network Gateway (CUPS BNG) architecture, the PFCP protocol is used to program traffic forwarding rules from the control plane or control plane function (e.g., Aggregate Gateway Function-Control Plane (AGF-CP)) to the user plane or user plane function (e.g., AGF-User Plane (AGF-UP)) and vice-versa. Each set of traffic forwarding rules that can be used for one or more PDU sessions from a single RG is referred to as a PFCP session.

Generally, the control plane is responsible for maintaining session states and providing instructions to the user plane. The user plane is responsible for moving packets through the system from ingress to egress by following the traffic rules programmed by the control plane, and independently interacting with other nodes in the network through various routing protocols (e.g., Ethernet Virtual Private Network (EVPN), Border Gateway Protocol (BGP), Interior Gateway Protocol (IGP), etc.).

In the context of wireline access to the 5GC, 5G-RGs may be served by the 5GC. A 5G-RG acts as a full 3GPP User Equipment (UE) that is assumed to terminate 3GPP Non-access stratum (NAS) signaling and to support User Equipment Route Selection Policy (URSP) rules sent by the 5GC to UE.

The PFCP protocol programs the forwarding rules on a per subscriber basis including the queue or policer rate per traffic or forwarding class. In most broadband use cases, an Internet Service Provider (ISP) (or service provider) offers a limited set of service offerings (or services) based on bandwidth. Therefore, subscribers often share a same QoS template (including programmed set of QoS parameters) when paying for the same service, rather than the control plane programming the user plane with individual QoS parameters for each subscriber. QoS parameters may be provisioned statically or dynamically. Static provisioning of QoS parameters involves the use of static QoS templates, whereas dynamic provisioning involves programming of QoS parameters and the like in real time. QoS templates may be programmed on the user plane by the control plane using PFCP association, wherein the QoS templates themselves utilize QoS Enforcement Rules (QERs) with indices.

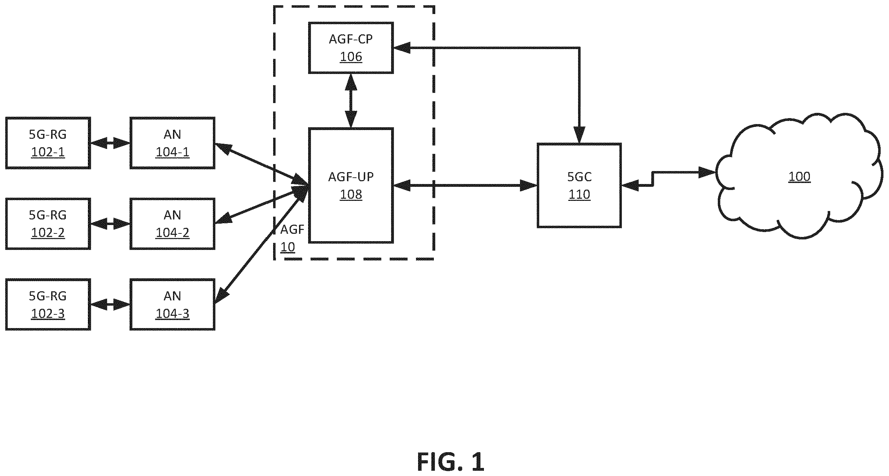

FIG. 1 is a block diagram illustrating a portion of a system architecture for wireless core network access by a 5G-RG, according to example embodiments. In the example shown in FIG. 1, the system architecture incorporates a CUPS BNG architecture.

Referring to FIG. 1, the communications network includes a plurality of 5G-RGs 102-1, 102-2, 102-3, a plurality of Access Networks (ANs) 104-1, 104-2, 104-3 (also referred to as Access Nodes or AN nodes), an Aggregate Gateway Function (AGF) node 10, a wireless core network 110 and a Data Network (DN), such as the Internet 100. In this example, the wireless core network 110 is a 5GC and each of the 5G-RGs 102-1, 102-2, 102-3 is served by a corresponding one of the ANs 104-1, 104-2, 104-3. However, example embodiments should not be limited to this example.

Each of the ANs 104-1, 104-2, 104-3 may include one or more of a Next Generation Radio Access Network (NG-RAN) or a Wireline 5G Access Network (W-5GAN).

Each of the 5G-RGs 102-1, 102-2 and 102-3 may provide IP services to one or more end user devices or customer premises equipment (CPE) (not shown in FIG. 1). In one example, an end user device or CPE is understood to be a hardware device or equipment typically located at the home or business of a customer. Example end user devices may include terminals or electronic devices such as mobile phones, laptops, computers, tablets, wireless (e.g., WiFi) access points, wireless network (e.g., WiFi) extenders, fixed wireless access units, Small Cell devices, or the like.

Although only a certain number of 5G-RGs and ANs are shown in FIG. 1, example embodiments should not be limited to this example. Rather, any number of 5G-RGs may be served by a given AN and/or any number of ANs may be served by an AGF.

For example purposes, one or more example embodiments will be discussed in more detail below with regard to the 5G-RG 102-1 and the AN 104-1. However, it should be understood that the 5G-RGs 102-2 and 102-3 may have the same or substantially the same functionality as the 5G-RG 102-1. Similarly, it should be understood that the ANs 104-2 and 104-3 may have the same or substantially the same functionality as the AN 104-1.

The 5G-RG 102-1 is a RG that connects one or more end user devices or CPE to the Internet (or other data network) 100 through the 5GC 110. The 5G-RG 102-1 registers and authenticates with the 5GC 110 through the use of standard mobile 3GPP procedures. The 5G-RG 102-1 processes control messages (e.g., 3GPP NAS messages) from the 5GC 110 and access stratum (AS) messages from the AGF 10.

Once authenticated with the 5GC 110, the 5G-RG 102-1 may be assigned one or more IP addresses upon request. The 5G-RG 102-1 may either utilize the assigned IP address as the Network Address Translation (NAT) public address (e.g., for IPv4) or assign the prefixes directly to the end user devices (e.g., for IPv6).

The 5G-RG 102-1 may support multiple services, such as IPTV. In some embodiments, IPTV can be defined as multimedia services, such as television, video, audio, textual media, graphics, data, combinations thereof, and/or the like that are delivered over IP-based networks supporting the required level of QoS, Quality of Experience (QoE), security, interactivity, reliability, or the like.

The 5G-RG 102-1 is connected to the 5GC 110 via the AN 104-1 and a gateway (or gateway function) referred to as the AGF 10. The AGF 10 is a function added to a wireline access network (e.g., the W-5GAN) that enables and/or allows connectivity to the 5GC 110 via wireline networks.

The AGF 10 is disaggregated to separate the control plane (AGF-Control Plane (AGF-CP) 106) and the user plane (AGF-User Plane (AGF-UP) 108).

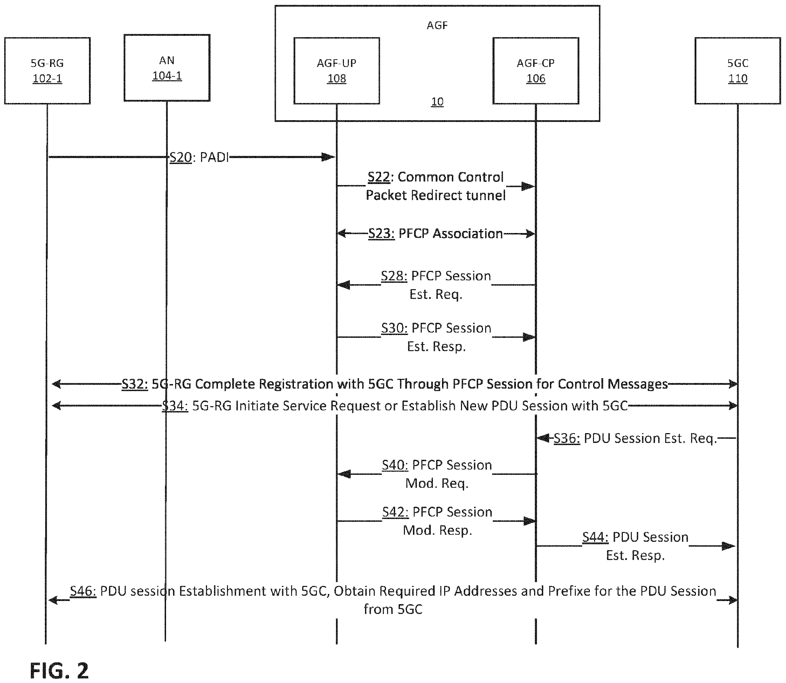

Among other functionality, as discussed similarly above, the AGF-CP 106 programs the AGF-UP 108 with forwarding rules and QoS parameters (e.g., on a per subscriber or PDU session basis or across subscriber or PDU sessions) via the PFCP protocol to facilitate network access by the 5G-RG 102-1 to the 5GC 110. Additional functionality of the elements of FIG. 1 will be discussed below with regard to FIGS. 2-3.

FIG. 2 is a signal flow diagram illustrating a method for network access, according to example embodiments. For example purposes, the example embodiment shown in FIG. 2 will be discussed with regard to the architecture shown in FIG. 1. It should be understood, however, that example embodiments should not be limited to this example.

Referring to FIG. 2, at S20 the AGF-UP 108 receives an initiation (e.g., PADI) message from the 5G-RG 102-1 through the AN 104-1, requesting network access (e.g., to the Internet 100) via the 5GC 110. Upon receipt, at S22 the AGF-UP 108 forwards the initiation message to the AGF-CP 106 via a common control packet redirect tunnel between the AGF-UP 108 and the AGF-CP 106.

At S23, the AGF-CP 106 and the AGF-UP 108 establish an active PFCP association by exchanging PFCP association setup messages. For example, the AGF-CP 106 sends a PFCP Association Setup Request message to the AGF-UP 108, and the AGF-UP 108 responds by sending a PFCP Association Setup Response message to the AGF-CP 106. Among other things, during PFCP Association setup at S23, the AGF-CP 106 utilizes the PFCP protocol to program one or more QoS templates at the AGF-UP 108 with QoS policy names, QoS Enforcement Rules (QERs) and associated lists of QoS parameters. In one example, a service provider may design a QoS template for each of the services offered to the 5G-RG 102-1. Each QoS template has a "name" (QoS policy name) and a list of QERs, each including defined and/or pre-determined QoS parameters (e.g., Peak Information Rate (PIR), Committed Information Rate (CIR), Priority (Prio), or the like). In this case, the QoS policy name is associated with a list of QERs, each of which includes QoS parameters assigned to a service by the service provider. If an update to the QoS templates at the AGF-UP 108 is needed (e.g., addition, deletion and/or modification of a QoS template), the AGF-CP 106 may send a PFCP association update to the AGF-UP 108 to affect the update to the programmed QoS templates. Accordingly, PFCP association messages may be used to program QoS templates and/or update QoS templates on a per service level and/or across subscribers associated with a QoS template or service.

In more detail, according to at least one example embodiment, a QoS template may include a list of traffic classifiers and a list of QoS parameters expressed as QERs. Indexing is used for the traffic classifiers such that a traffic classifier references a QER index, which further references and/or includes a list (or set) of QoS parameters associated with the QER (e.g., referenced by a QER index). Although discussed herein with regard to QER, it should be understood that one or more example embodiments may be applied to any QoS Information Element (IE) represented by one or more indices.

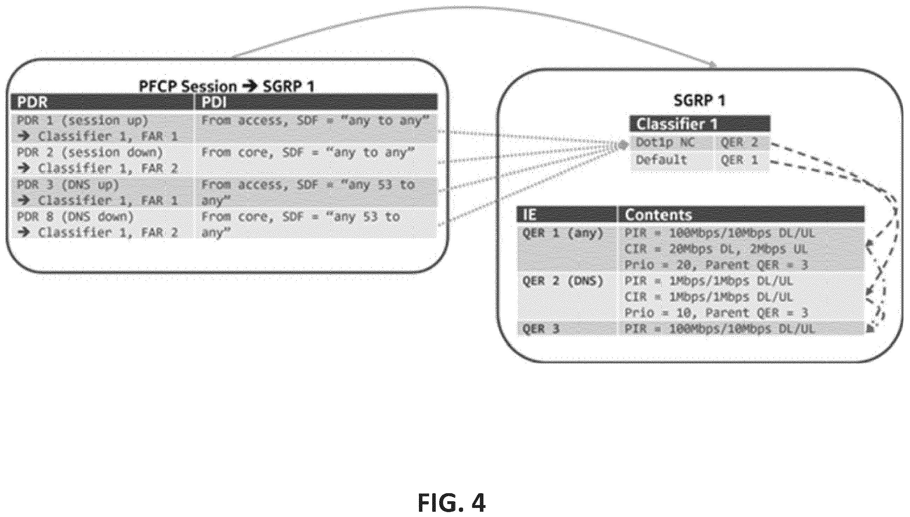

FIG. 4 illustrates a QoS template according to example embodiments.

Referring to FIG. 4, the QoS template SGRP1 includes a classifier index (Classifier 1) that references a table including a list or set of traffic classifiers (Dot1p_NC and Default), each of which is associated with a respective QER index (QER 1, QER 2, QER 3) (also referred to as a QoS rule index). The QoS template further includes a list of the QER indices (QoS rule indices), each of which is associated with a respective set or list of QoS parameters (e.g., PIR, CIR, Prio). The QER indices and QoS parameters are expressed as Information Elements (IEs).

Still referring to FIG. 4, as shown, a PFCP session may include a list of Packet Detection Rules (PDRs) and associated Packet Detection Information (PDI), wherein each PDR references a classifier index (e.g., Classifier 1) and a Forwarding Action Rule (FAR 1, FAR 2). A PDR identifies the particular forwarding rule, the PDI is a grouped Information Element (IE) specifying the matching criteria using the source interface and the traffic endpoint. A FAR specifies the forwarding action and destination for the redirected control packet. The classifier index refers to the table including the set of traffic classifiers associated with QERs for the PDU session.

During the programming of QoS template at the AGF-UP 108 (e.g., during PFCP Association), the AGF-CP 106 has knowledge of each classifier index and the QER index for each QoS template. Consequently, during a PDU session, the AGF-CP 106 may update one or more QoS parameters by referring to a respective index (e.g., classifier and/or QER index).

Returning to FIG. 2, at S28 and S30, the AGF 10 establishes a PFCP session including a set of forwarding rules for control messages between the 5G-RG 102-1 and the 5GC 110. In at least one example embodiment, the AGF 10 establishes the PFCP session to allow for exchanging of control signaling (or control messages) between the AGF-UP 108 and the AGF-CP 106. The control messages may be PPPoE control plane messages and/or NAS messages transported over PPP Vendor Specific Network Protocol (VSNP).

In more detail, for example, once having established the PFCP session at the AGF-CP 106, at S28 the AGF-CP 106 outputs a PFCP session establishment request message (PFCP Session Est. Req.) to the AGF-UP 108. Based on the PFCP session establishment request message, the AGF-UP 108 establishes the PFCP session at the AGF-UP 108. The AGF-UP 108 then outputs a PFCP session establishment response message (PFCP Session Est. Resp.) to the AGF-CP 106 at S30, indicating that the PFCP session has been established at the AGF-UP 108. Because PFCP session establishment messages for control signaling is generally known, further discussion is omitted.

At S32, the 5G-RG 102-1 completes registration with the 5GC 110 by exchanging control messages (e.g., NAS messages or PPPoE control plain messages) according to the established PFCP session (forwarding rules). During this process, the service provider identifies the 5G-RG 102-1 through its Subscriber Identity Module (SIM) card and provides the AGF-CP 106 with initial RG Level Wireline Access Characteristics (RG-LWAC). The RG-LWAC is a QoS parameter associated with a subscriber or subscription. The RG-LWAC may convey real time 5G QoS identifier (5QI) to traffic class mapping and other aggregate QoS information, such as downlink (DL) aggregate rate, aggregate policed uplink (UL) and DL, 5QI to TC mapping for DL, wherein each TC has a queue profile and policy profile. In at least one example embodiment, the RG-LWAC may include a QoS policy name corresponding to the QoS template (programmed at S23) that the 5G-RG 102-1 should use for the requested service at the 5G-RG 102-1. The RG-LWAC information includes the QoS policy name that the 5G-RG 102-1 should use for all PDU sessions.

At S34, the 5G-RG 102-1 initiates a service request or establishing of a new PDU session with the 5GC 110. As is generally known, a service request may be used in the case where the 5G-RG 102-1 needs and/or wants to re-establish the control (e.g., NAS) signaling and PDU session. In this case, the 5G-RG 102-1 is still registered with the 5GC 110, but may have temporarily lost connection with the AGF 10 (e.g., when a line is cut). If, however, the initiation message is requesting initial network access by the 5G-RG 102-1 to the 5GC 110, then at S34 the 5G-RG 102-1 may establish a new (initial) PDU session with the 5GC 110. Because service request and PDU session establishment methods such as this are generally known, a detailed discussion is omitted.

After completing the registration process at S34 and upon receipt of a PDU session establishment request from the 5GC 110 at S36, at S40 and S42, the AGF 10 modifies the established PFCP session to add a set of data forwarding rules. In so doing, the AGF 10 also specifies and/or updates the QoS parameters for the PDU session to be established. In more detail, for example, the AGF-CP 106 and the AGF-UP 108 exchange PFCP session modification messages for the requested PDU session to add a set of forwarding rules for data traffic and specify the QoS parameters to be used for the requested PDU session. In one example (e.g., using a static template), the QoS parameters may be specified by providing a QoS policy name to the AGF-UP 108 for the PDU session to be established (e.g., QER1: template-1). The AGF-CP 106 may also include a QoS policy and QERs, which include specific QoS parameters, that may override the QERs within the QoS policy. In the dynamic case, the AGF-CP 106 may specify individual QoS parameters (e.g., QER1: CIR 10 PIR 20, QER2: CIR 20 PIR 40, etc.) for the PDU session to be established. The AGF-UP 108 may update entries in the QoS template based on this information from the AGF-CP 106.

In still more detail, once having modified the PFCP session as needed to add the necessary set of forwarding rules and specify QoS parameters at the AGF-CP 106 (e.g., via a QoS template or by individual QoS parameters), at S40 the AGF-CP 106 sends a PFCP session modification request message (PFCP Session Mod. Req.) specifying, among other things, the QoS parameters (e.g., via QoS policy name or via individual QoS parameters) for the PDU or subscriber session, to the AGF-UP 108. Based on the PFCP modification request message, the AGF-UP 108 modifies the PFCP session as needed to add the necessary set of forwarding rules and specify the QoS parameters for the PDU session at the AGF-UP 108. The AGF-UP 108 then sends a PFCP session modification response message (PFCP Session Mod. Resp.) to the AGF-CP 106 at S42, indicating that the PFCP session has been modified at the AGF-UP 108. Because PFCP modification messages and methods for modifying PFCP sessions are otherwise generally known, further discussion is omitted.

At S44, once the PFCP session has been modified, the AGF-CP 106 outputs a PDU session establishment response message (PDU Session Est. Resp.) to the 5GC 110.

At S46, the 5G-RG 102 completes establishment of the requested PDU session with the 5GC 110 and obtains the required IP address(es) and prefix(es) for the PDU session from the 5GC 110.

Once the PDU session between the 5G-RG 102-1 and the 5GC 110 has been established, the AGF 10 facilitates access to the 5GC 110 by the 5G-RG 102-1 according to the PFCP session and QoS parameters at the AGF-CP 106 and the AGF-UP 108.

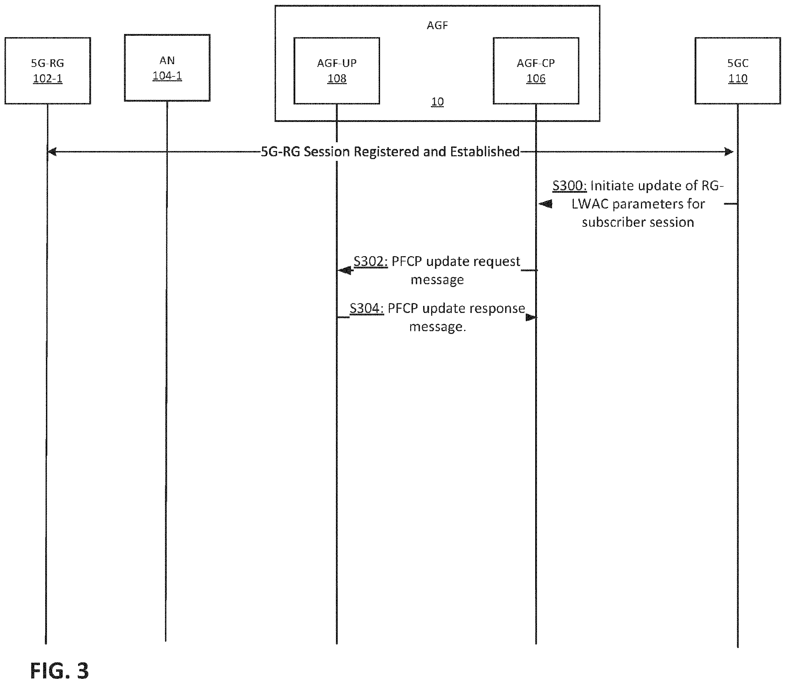

One or more example embodiments also provide a mechanism to selectively update various QoS parameters for one or more PDU sessions mid-session. Such an example embodiment will be discussed below with regard to FIG. 3.

FIG. 3 is a signal flow diagram illustrating another method for network access, according to example embodiments. As with FIG. 2, for example purposes, the example embodiment shown in FIG. 3 will be discussed with regard to the architecture shown in FIG. 1. It should be understood, however, that example embodiments should not be limited to this example.

Referring to FIG. 3, once the 5G-RG 102-1 has completed registration with the 5GC 110, at S300 the AGF-UP 106 receives a RG-LWAC update message from the 5GC 110 informing the AGF-CP 106 of an update to the RG-LWAC for the PDU session at the 5G-RG 102-1. The RG-LWAC update message includes an updated RG-LWAC for the 5G-RG 102-1.

Upon receipt of the updated RG-LWAC, the AGF-CP 106 processes and/or parses the updated RG-LWAC to determine, for example, a QER to be updated for the 5G-RG 102-1. Because the QER are indexed as discussed above, the AGF-CP 106 may update the QER for a particular traffic classifier by referencing the particular QER index and updating the corresponding entry (e.g., QoS parameters) in the QoS template.

At S302, the AGF-CP 106 sends a PFCP update request message requesting update of QoS parameters for one or more subscribers and/or PDU sessions. Based on the PFCP update request message, the AGF-UP 108 updates the QoS parameters as needed at the AGF-UP 108. The AGF-UP 108 then sends a PFCP session update response message to the AGF-CP 106 at S304, indicating that the QoS parameters have been updated at the AGF-UP 108.

In one example, to update on a per-subscriber session basis, the PFCP update request message may be a PFCP session modification request message (PFCP Session Mod. Req.) and the PFCP update response message may be a PFCP session modification response message (PFCP Session Mod. Resp.). The PFCP session modification request message may include, for example, reference to a QER index and one or more QoS parameters to be updated. Based on the PFCP modification request message, the AGF-UP 108 updates the QoS template for the PDU session at the AGF-UP 108.

In another example, to update across multiple subscriber sessions (e.g., on a per-service basis across all subscriber sessions), the PFCP update request message may be a PFCP association request message and the PFCP update response message may be a PFCP association response message. The PFCP association request message may include, for example, reference to a QER index for a QoS template, which may update the QER for all subscriber sessions using the QoS template to be updated. Based on the PFCP modification request message, the AGF-UP 108 updates the QoS template for the PDU session at the AGF-UP 108.

Still referring to FIG. 3, once having updated the QoS parameters as needed, the AGF 10 then continues to facilitate access to the 5GC 110 by the 5G-RG 102-1 according to the PFCP session including updated QoS template at the AGF-CP 106 and the AGF-UP 108.

According to one or more example embodiments, the use of indexing and/or QoS templates, according to one or more example embodiments, may enable the AGF-CP 106 to update one or more QoS parameters during mid-session by referring to an index (e.g., directly), such as a QER and/or classifier index.

According to one or more example embodiments, the AGF-CP 106 may also selectively update QoS parameters for one or more PDU sessions (e.g., individually) by, for example, updating QoS parameters associated with a QER index, updating a QER index associated with a given traffic classifier and/or updating a classifier index included in PFCP session for the one or more PDU sessions, while leaving QoS parameters for other PDU sessions unchanged.

According to one or more example embodiments, the AGF-CP 106 may also update a QER for a QoS template, which may update the QER for all PDU sessions using the QoS template.

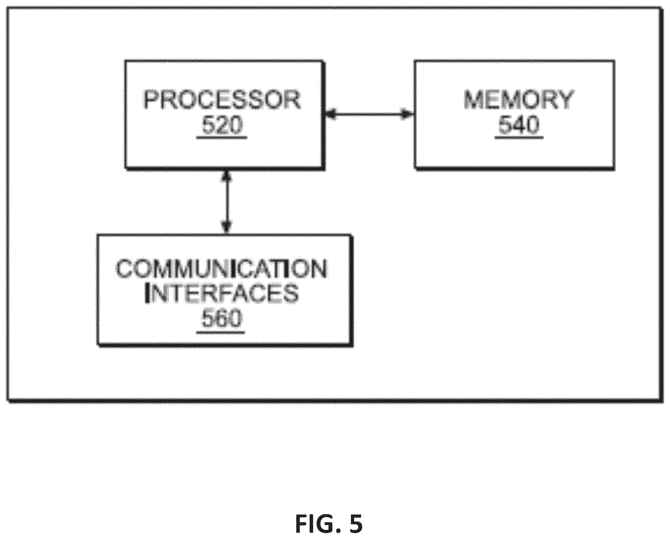

FIG. 5 illustrates an example embodiment of a network node at which an AGF may be implemented. The structure shown in FIG. 5 may also be representative of other network elements, such as residential gateways, CPEs, etc.

As shown, the network node includes: a memory 540; a processor 520 connected to the memory 540; various communication interfaces 560 connected to the processor 520. The various interfaces 560 may constitute a transceiver for transmitting/receiving data from/to other network elements (e.g., network nodes, routers, nodes, servers, BNGs, etc.). As will be appreciated, depending on the implementation of the network node, the network node may include many more components than those shown in FIG. 5. However, it is not necessary that all of these generally conventional components be shown in order to disclose the illustrative example embodiment. For example purposes, the example embodiment shown in FIG. 5 will be discussed with regard to a processor 520. However, it should be understood that the network node shown in FIG. 5 may include one or more processors or other processing circuitry, such as one or more Application Specific Integrated Circuits (ASICs).

The memory 540 may be a computer readable storage medium that generally includes a random access memory (RAM), read only memory (ROM), and/or a permanent mass storage device, such as a disk drive. The memory 540 also stores an operating system and any other routines/modules/applications for providing the functionalities of the network node (including UPF, CPF, MPF, etc.) to be executed by the processor 520. These software components may also be loaded from a separate computer readable storage medium into the memory 540 using a drive mechanism (not shown). Such separate computer readable storage medium may include a disc, tape, DVD/CD-ROM drive, memory card, or other like computer readable storage medium (not shown). In some example embodiments, software components may be loaded into the memory 540 via one of the various interfaces 560, rather than via a computer readable storage medium.

The processor 520 or other processing circuitry may be configured to carry out instructions of a computer program by performing the arithmetical, logical, and input/output operations of the system. Instructions may be provided to the processor 520 by the memory 540.

The various communication interfaces 560 may be wired and may include components that interface the processor 520 with the other input/output components. As will be understood, the various interfaces 560 and programs stored in the memory 540 to set forth the special purpose functionalities of the network node will vary depending on the implementation of the network node.

The interfaces 560 may also include one or more user input devices (e.g., a keyboard, a keypad, a mouse, or the like) and user output devices (e.g., a display, a speaker, or the like).

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/ acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing network nodes, BNGs, servers, ANs, CPEs, routers, or other network elements and/or hardware. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, network nodes, BNGs, servers, ANs, CPEs, routers, or other network elements, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A method for network access by a residential gateway in a control and user plane separation architecture, the control and user plane separation architecture including a control plane and a separate user plane, the method comprising:
establishing, via an aggregate gateway function, a packet forwarding control protocol session between the residential gateway and a network, the packet forwarding control protocol session hosting a set of forwarding rules for forwarding data traffic between the control plane and the separate user plane, the set of forwarding rules including a classification index referencing a Quality of Service (QoS) template, the QoS template including a set of traffic classifiers and one or more sets of QoS parameters, wherein
the set of traffic classifiers is associated with the classification index,
each of the one or more sets of QoS parameters is associated with a respective QoS rule index among one or more QoS rule indices, and
each traffic classifier in the set of traffic classifiers is associated with a QoS rule index among the one or more QoS rule indices; and
facilitating, via the aggregate gateway function, network access by the residential gateway according to the packet forwarding control protocol session.

2. The method of claim 1, wherein the one or more QoS rule indices and the one or more sets of QoS parameters are expressed as information elements.

3. The method of claim 1, wherein the one or more sets of QoS parameters include at least one of rate or priority information for the data traffic.

4. The method of claim 1, further comprising:
updating at least one of the one or more sets of QoS parameters based on Residential Gateway-Level Wireline Access Characteristics (RG-LWAC) from the network.

5. The method of claim 4, wherein the updating updates the at least one of the one or more sets of QoS parameters by changing the QoS template based on the RG-LWAC.

6. The method of claim 4, further comprising:
updating the QoS template to change at least one of (i) a QoS parameter of a first of the one or more sets of QoS parameters or (ii) the QoS rule indices, based on the RG-LWAC.

7. The method of claim 4, wherein the updating comprises:
sending a packet forwarding control protocol session modification message from the control plane to the separate user plane, the packet forwarding control protocol session modification message including reference to a QoS rule index and one or more QoS parameters to be updated; and
updating the QoS parameters based on the packet forwarding control protocol session modification message.

8. The method of claim 1, further comprising:
programming the QoS template at the separate user plane prior to the establishing.

9. A network element to facilitate network access by a residential gateway in a control and user plane separation architecture, the control and user plane separation architecture including a control plane and a separate user plane, the network element comprising means to:
establish a packet forwarding control protocol session between the residential gateway and a network, the packet forwarding control protocol session hosting a set of forwarding rules for forwarding data traffic between the control plane and the separate user plane, the set of forwarding rules including a classification index referencing a Quality of Service (QoS) template, the QoS template including a set of traffic classifiers and one or more sets of QoS parameters, wherein
the set of traffic classifiers is associated with the classification index,
each of the one or more sets of QoS parameters is associated with a respective QoS rule index among one or more QoS rule indices, and
each traffic classifier in the set of traffic classifiers is associated with a QoS rule index among the one or more QoS rule indices, and
facilitate network access by the residential gateway according to the packet forwarding control protocol session.

10. The network element of claim 9, wherein the one or more QoS rule indices and the one or more sets of QoS parameters are expressed as information elements.

11. The network element of claim 9, wherein the one or more sets of QoS parameters include at least one of rate or priority information for the data traffic.

12. The network element of claim 9, wherein the at least one memory stores instructions that, when executed by the at least one processor, cause the network element to update at least one of the one or more sets of QoS parameters based on Residential Gateway-Level Wireline Access Characteristics (RG-LWAC) from the network.

13. The network element of claim 12, wherein the at least one memory stores instructions that, when executed by the at least one processor, cause the network element to update the at least one of the one or more sets of QoS parameters by changing the QoS template based on the RG-LWAC.

14. The network element of claim 12, wherein the at least one memory stores instructions that, when executed by the at least one processor, cause the network element to update the QoS template to change at least one of (i) a QoS parameter of a first of the one or more sets of QoS parameters or (ii) the QoS rule indices, based on the RG-LWAC.

15. A non-transitory computer-readable storage medium storing computer-executable instructions that, when executed by at least one processor at a network element in a control and user plane separation architecture, cause the network element to perform a method for network access by a residential gateway, the method comprising:
establishing a packet forwarding control protocol session between the residential gateway and a network, the packet forwarding control protocol session hosting a set of forwarding rules for forwarding data traffic between a control plane and a separate user plane, the set of forwarding rules including a classification index referencing a Quality of Service (QoS) template, the QoS template including a set of traffic classifiers and one or more sets of QoS parameters, wherein
the set of traffic classifiers is associated with the classification index,
each of the one or more sets of QoS parameters is associated with a respective QoS rule index among one or more QoS rule indices, and
each traffic classifier in the set of traffic classifiers is associated with a QoS rule index among the one or more QoS rule indices; and
facilitating network access by the residential gateway according to the packet forwarding control protocol session.
